(19) **Europäisches Patentamt / European Patent Office / Office européen des brevets**

(11) **EP 4 290 454 B1**

(12) # FASCICULE DE BREVET EUROPEEN

(45) Date de publication et mention de la délivrance du brevet:
**12.02.2025 Bulletin 2025/07**

(21) Numéro de dépôt: **23178443.0**

(22) Date de dépôt: **09.06.2023**

(51) Classification Internationale des Brevets (IPC):
**G06T 7/11** *(2017.01)* **G06T 7/136** *(2017.01)*

(52) Classification Coopérative des Brevets (CPC):
**G06T 7/11; G06T 7/136;** G06T 2207/10032;
G06T 2207/30181; G06T 2207/30242

(54) **PROCÉDÉ ET DISPOSITIF DE SEGMENTATION D 'AU MOINS UNE IMAGE COULEUR SOURCE REPRÉSENTATIVE D'UNE CENTRALE PHOTOVOLTAÏQUE**

VERFAHREN UND VORRICHTUNG ZUR SEGMENTIERUNG MINDESTENS EINES FÜR EIN PHOTOVOLTAIKKRAFTWERK REPRÄSENTATIVEN QUELLFARBBILDES

METHOD AND DEVICE FOR SEGMENTING AT LEAST ONE COLOR SOURCE IMAGE REPRESENTATIVE OF A PHOTOVOLTAIC PLANT

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **10.06.2022 FR 2205625**

(43) Date de publication de la demande:
**13.12.2023 Bulletin 2023/50**

(73) Titulaire: **Commissariat à l'Energie Atomique et aux Energies Alternatives**
**75015 Paris (FR)**

(72) Inventeurs:
• **HA, Duy Long**
 **38054 GRENOBLE CEDEX 9 (FR)**
• **AIME, Jérémie**
 **38054 GRENOBLE CEDEX 9 (FR)**
• **STEPEC, Murielle**
 **38054 GRENOBLE CEDEX 9 (FR)**

(74) Mandataire: **Lavoix**
 **2, place d'Estienne d'Orves**
 **75441 Paris Cedex 09 (FR)**

(56) Documents cités:
CN-A- 110 930 358  CN-A- 111 080 691
CN-A- 112 116 600  CN-A- 113 989 260
CN-A- 114 332 020  CN-A- 114 463 308

• VEGA DÍAZ JHON JAIRO ET AL: "Solar Panel Detection within Complex Backgrounds Using Thermal Images Acquired by UAVs", SENSORS, vol. 20, no. 21, 31 October 2020 (2020-10-31), XP055818824, DOI: 10.3390/ s20216219
• LUCA MORANDO ET AL: "Thermal and Visual Tracking of Photovoltaic Plants for Autonomous UAV inspection", ARXIV.ORG, CORNELL UNIVERSITY LIBRARY, 201 OLIN LIBRARY CORNELL UNIVERSITY ITHACA, NY 14853, 12 April 2022 (2022-04-12), XP091196682

**EP 4 290 454 B1**

**Description**

La présente invention concerne un procédé de segmentation d'au moins une image couleur source représentative d'une centrale photovoltaïque comprenant M modules photovoltaïques, M étant un entier, le procédé étant mis en oeuvre par un dispositif électronique de segmentation d'au moins une image couleur source.

L'invention concerne également un programme d'ordinateur comportant des instructions logicielles qui, lorsqu'elles sont exécutées par un ordinateur, mettent en oeuvre un tel procédé de segmentation d'au moins une image couleur source représentative d'une centrale photovoltaïque comprenant M modules photovoltaïques.

L'invention concerne également un dispositif électronique de segmentation d'au moins une image couleur source représentative d'une centrale photovoltaïque comprenant M modules photovoltaïques, M étant un entier.

L'invention se situe dans le domaine de la production d'électricité par des installations photovoltaïques, et plus particulièrement dans le domaine de la surveillance du bon fonctionnement de telles installations.

De manière connue, les installations photovoltaïques (également appelées centrales photovoltaïques par la suite) comprennent une ou plusieurs chaînes de modules photovoltaïques, chaque chaîne comprenant un ensemble de modules photovoltaïques, pouvant se réduire à un seul module photovoltaïque, les chaînes étant connectées en série et/ou en parallèle entre une borne positive et une borne négative, chaque module étant composé d'au moins une cellule photovoltaïque, en général une matrice de cellules, chaque cellule étant une unité configurée pour produire un courant électrique à partir de l'énergie lumineuse. Une telle installation est adaptée pour alimenter en énergie électrique une charge, par exemple un onduleur adapté pour générer des tensions et des courants alternatifs à partir d'une source produisant un courant électrique continu, relié à un réseau électrique alternatif.

Un des problèmes qui se pose dans ce type de centrale photovoltaïque est la surveillance de bon fonctionnement de l'installation, et ainsi que le diagnostic en cas de détection de dysfonctionnement.

En effet, une baisse dans la fourniture d'énergie électrique peut provenir de la présence d'ombrage par exemple, qui est susceptible d'affecter une sous-partie des modules photovoltaïques, ou d'autres problèmes nécessitant une maintenance, comme par exemple la présence de salissures, un défaut de transparence du verre, un vieillissement des connectiques.

En pratique, une telle centrale photovoltaïque est généralement traitée au préalable par imagerie au moyen d'une segmentation d'images, de telles images correspondent généralement à des photos aériennes de la centrale photovoltaïque, afin d'identifier et de séparer chaque module photovoltaïque de leur environnement, et procéder ensuite au diagnostic en tant que tel.

On connaît des méthodes de segmentation basées sur une sélection tout d'abord manuelle, mais une telle sélection est généralement chronophage, fatigante visuellement, et source d'erreur, donc peu précise.

Une autre méthode de segmentation d'images classiques est notamment décrite par N. Otsu et al. dans la publication intitulée « A threshold selection method from gray-level histograms », IEEE Trans. Sys., Man., Cyber., vol. 9, 1979, p. 62-66 (DOI 10.1109/TSMC.1979.4310076), et basée sur une détection par mono-seuillage.

Une telle méthode classique est inadaptée à la segmentation d'images représentatives d'une centrale photovoltaïque, notamment du fait qu'un mono-seuillage présente généralement l'inconvénient d'être limité par deux phénomènes, à savoir d'une part une surévaluation du seuil si bien que des modules photovoltaïques présents au sein d'une zone de l'image capturée avec une faible luminosité ne sont pas détectés, ou d'autre part à l'inverse une sous-évaluation du seuil si bien que des modules photovoltaïques présents au sein d'une zone de l'image capturée cette fois avec une forte luminosité ne sont pas non plus détectés.

Autrement dit, cette méthode de l'état de la technique pour segmenter des images classiques n'est pas adaptée à la segmentation d'images représentative d'une centrale photovoltaïque, car l'exposition des modules photovoltaïques la constituant est propre à différer d'un module photovoltaïque à l'autre en fonction de l'angle d'exposition par rapport au soleil et/ou de l'angle de prise de vue de l'image source, si bien que deux modules photovoltaïques sont propres à présenter sur ladite image source une couleur et/ou un motif différent d'un module photovoltaïque à l'autre.

Une autre méthode de segmentation d'images classiques est notamment décrite par J. Canny dans la publication intitulée « A Computational Approach To Edge Detection », IEEE Transactions on Pattern Analysis and Machine Intelligence, vol. 8, 1986, p. 679-698, et basée sur une détection par contour, mais également inadaptée à la segmentation d'images représentative d'une centrale photovoltaïque, pour une raison similaire à savoir que les modules photovoltaïques réagissent différemment selon leur orientation et/ou leur inclinaison par rapport au soleil, la luminosité ayant un fort impact sur la couleur et la réflexion sur le busbar (également appelé barre solaire) du module photovoltaïque.

La publication "Solar Panel Detection within Complex Backgrounds Using Thermal Images Acquired by UAVs" de Vega Diaz Jhon Jairo ET. AL. dans Sensors, vol. 20, no. 21, (2020-10-31) divulgue une méthode utilisant un algorithme d'apprentissage pour la détection de panneaux solaires dans des images en utilisant des étapes de pré-traitement augmentant l'efficacité de la détection.

D'autres méthodes de segmentation d'images représentatives d'une centrale photovoltaïque ont été proposées, notamment une méthode de segmentation basée sur l'utilisation d'un réseau de neurones permettant d'obtenir une segmentation avec une précision de l'ordre de 85 à 90%, ce qui n'est toujours pas optimal.

Par conséquent, il existe un besoin spécifique d'améliorer la précision de segmentation d'images représentatives d'une centrale photovoltaïque, afin d'en améliorer ensuite le diagnostic de fonctionnement.

A cet effet, l'invention a pour objet un procédé de segmentation d'au moins une image couleur source représentative d'une centrale photovoltaïque comprenant M modules photovoltaïques, M étant un entier, le procédé étant mis en oeuvre par un dispositif électronique de segmentation d'au moins une image, et comprenant les étapes suivantes :

- conversion de ladite image couleur source en une image en niveau de gris, ladite conversion remplaçant, pour chaque pixel de ladite image couleur, les niveaux de rouge, vert et bleu par une seule valeur de niveau de gris comprise entre 0 et 255, le 0 correspondant à un niveau blanc et le 255 correspondant à un niveau noir ;
- détermination d'une dimension en pixels minimale et d'une dimension en pixels maximale desdits M modules photovoltaïques ;
- détermination d'un premier ensemble de N bornes minimales de valeurs de niveau de gris et d'un deuxième ensemble de Q bornes maximales de valeurs de niveau de gris ;
- pour un premier couple formé d'une desdites N bornes minimales $bmin_{i0}$ et d'une desdites Q bornes maximales $bmax_{j0}$, avec les indices $i_0$ et $j_0$ respectivement de borne minimale et de borne maximale dudit premier couple tels que $1 \leq i_0 \leq N$ et $1 \leq j_0 \leq Q$, première itération des étapes successives suivantes :

  - conversion de ladite image en niveau de gris en une image binaire selon laquelle :

    - chaque pixel, dont le niveau de gris est entre les bornes dudit premier couple, est associé à une première valeur binaire représentative de la détection d'un pixel de modules photovoltaïque, et
    - chaque pixel, dont le niveau de gris est en dehors desdites bornes dudit premier couple, est associé à la valeur binaire complémentaire de ladite première valeur binaire, ladite valeur binaire complémentaire étant représentative de l'absence de détection d'un pixel de modules photovoltaïque ;

  - à partir de ladite dimension en pixels minimale et de ladite dimension en pixels maximale desdits M modules photovoltaïques, recherche d'ensemble(s) distinct(s) de pixels, au sein

    desdits pixels dont la valeur binaire est représentative de la détection d'un pixel de modules photovoltaïque, chaque ensemble de pixels recherché correspondant à un desdits M modules photovoltaïques,
  - mémorisation du ou desdits ensemble(s) de pixels détecté(s) au cours de ladite recherche,
  pour chaque autre couple, distinct dudit premier couple par au moins une des bornes minimale et/ou maximale, réitération des étapes précédentes de conversion en image binaire, recherche, et mémorisation, une étape de suppression, au sein d'une itération courante, distincte de la première itération, du ou des ensemble(s) de pixels identifié(s) au cours des itérations précédentes étant mise en oeuvre entre l'étape de conversion en image binaire et l'étape de recherche, l'étape de recherche se concentrant lors de l'itération courante sur les seules zones restantes de l'image binaire de ladite itération courante.

Ce procédé est mis en oeuvre automatiquement sans intervention humaine, et propose une segmentation multi-seuils préalablement déterminés et adaptés pour une segmentation optimale d'images représentatives d'une centrale photovoltaïque.

Une telle segmentation multi-seuils permet de balayer, à chaque itération, différentes plages dynamiques (également appelées gammes dynamiques) de l'image source, convertie en une image en niveau de gris, et correspondant notamment à une photo aérienne, en recherchant, pour chaque plage dynamique, des modules photovoltaïques qui sont ensuite supprimés à l'itération suivante associée à une plage dynamique distincte de la plage dynamique associée à l'itération courante, et ce pour trouver d'autres modules photovoltaïques non détectés lors de l'itération courante.

La présente invention offre des résultats prouvés quasi-optimaux en permettant de détecter 99% des modules photovoltaïques, ce qui revient à exploiter l'ensemble de l'information de l'image source en extrayant un maximum de modules de la centrale photovoltaïque considérée.

De plus, l'étape de suppression du procédé selon la présente invention permet d'éviter un éventuel problème de sur-détection ou de détection répétitive d'un même module à chaque itération, tout module détecté lors d'une itération courante étant par la suite supprimé lors de la recherche au sein de l'image binaire de l'itération suivante.

Suivant d'autres aspects avantageux de l'invention, le procédé de segmentation d'au moins une image couleur source représentative d'une centrale photovoltaïque comprend une ou plusieurs des caractéristiques suivantes, prises isolément ou suivant toutes les combinaisons techniquement possibles :

- la conversion de ladite image couleur en niveau de gris comprend un floutage ;
- ledit floutage est mis en oeuvre au moyen d'un noyau de taille en pixels prédéterminée par rapport à une taille prédéterminée de cellule photovoltaïque ;
- la détermination du premier ensemble de N bornes minimales de valeurs de niveau de gris et du deuxième ensemble de Q bornes maximales de valeurs de niveau de gris, utilise au moins trois paramètres correspondant à une médiane A de valeur de gris de l'image en niveau de gris, un écart type E de valeur de gris de l'image en niveau de gris, et à un pas P inter-borne prédéterminé entre deux bornes successives ;
- ledit pas est proportionnel audit écart type de valeur de gris de l'image en niveau de gris ;
- la première borne minimale $bmin_{i=1}$ dudit premier ensemble de N bornes minimales est telle que : $bmin_{i=1} = (A-E)$, le pas P entre deux bornes minimales successives est tel que $P=0,25*E$, et la dernière borne minimale dudit premier ensemble de N bornes minimales est tel que $bmin_{i=N} \leq 0,95*A$, et dans lequel la première borne maximale $bmax_{j=1}$ dudit deuxième ensemble de Q bornes maximales est telle que : $bmax_{j=1} = A$, le pas P entre deux bornes maximales successives est tel que $P=0,25*E$, et la dernière borne maximale dudit deuxième ensemble de N bornes maximales est tel que $bmax_{j=Q} \leq A+(2*E)$;
- la détermination d'une dimension en pixels minimale et d'une dimension en pixels maximale desdits M modules photovoltaïques utilise les métadonnées de ladite image couleur source et l'inclinaison de chaque module photovoltaïque ;
- ladite recherche d'ensemble(s) distinct(s) de pixels, chaque ensemble de pixels recherché correspondant à un desdits M modules photovoltaïques comprend :

  - la formation de régions distinctes regroupant chacune une partie distincte desdits pixels dont la valeur binaire est représentative de la détection d'un pixel de module photovoltaïque, chaque région présentant une dimension en pixels minimale et une dimension en pixels maximale respectivement sensiblement égales à ladite dimension en pixels minimale et à ladite dimension en pixels maximale desdits M modules photovoltaïques,
  - l'extraction des propriétés de chaque région ;
  - pour chaque région, la vérification de la conformité desdites propriétés aux propriétés associées à une image de référence de module photovoltaïque, et dans l'affirmative la validation de ladite région comme ensemble de pixels recherché correspondant à un desdits M modules photovoltaïques.

L'invention a également pour objet un programme d'ordinateur comportant des instructions logicielles qui, lorsqu'elles sont exécutées par un ordinateur, mettent en oeuvre un procédé de segmentation d'au moins une image couleur source représentative d'une centrale photovoltaïque tel que défini ci-dessus.

L'invention a aussi pour objet un dispositif électronique de segmentation d'au moins une image couleur source représentative d'une centrale photovoltaïque, comprenant M modules photovoltaïques, M étant un entier, le dispositif électronique d'au moins une image couleur source, comprenant :

- un premier module de conversion, configuré pour convertir ladite image couleur source en une image en niveau de gris, en remplaçant, pour chaque pixel de ladite image couleur, les niveaux de rouge, vert et bleu par une seule valeur de niveau de gris comprise entre 0 et 255, le 0 correspondant à un niveau blanc et le 255 correspondant à un niveau noir ;
- un premier module de détermination configuré pour déterminer une dimension en pixels minimale et une dimension en pixels maximale desdits M modules photovoltaïques ;
- un deuxième module de détermination d'un premier ensemble de N bornes minimales de valeurs de niveau de gris et d'un deuxième ensemble de Q bornes maximales de valeurs de niveau de gris ;
- un deuxième module de conversion configuré pour convertir ladite image en niveau de gris en une image binaire, en associant, pour un couple formé d'une desdites N bornes minimales et d'une desdites Q bornes maximales :

  - chaque pixel, dont le niveau de gris est entre les bornes dudit couple, à une première valeur binaire représentative de la détection d'un pixel de module photovoltaïque, et
  - chaque pixel, dont le niveau de gris est en dehors desdites bornes dudit couple, à la valeur binaire complémentaire de ladite première valeur binaire, ladite valeur binaire complémentaire étant représentative de l'absence de détection d'un pixel de module photovoltaïque ;

- un module de recherche, configuré pour rechercher, à partir de ladite dimension en pixels minimale et de ladite dimension en pixels maximale desdits M modules photovoltaïques, des ensemble(s) distinct(s) de pixels, au sein desdits pixels dont la valeur binaire est représentative de la détection d'un pixel de module photovoltaïque, chaque ensemble de pixels recherché correspondant à un desdits M modules photovoltaïques,
- un module de mémorisation du ou desdits ensemble(s) de pixels détecté(s) par ledit module de recherche,

lesdits deuxième module de conversion, module de recherche, et module de mémorisation étant propres à réitérer leur traitement respectif pour chaque couple, formé d'une desdites N bornes minimales et d'une desdites Q bornes maximales, et distinct d'un couple à l'autre par au moins une de ses bornes minimale et/ou maximale,

le dispositif électronique de segmentation d'au moins une image couleur source, comprenant en outre un module de suppression configuré pour :

- supprimer au sein d'une itération courante, distincte de la première itération, le ou les ensemble(s) de pixels identifié(s) au cours des itérations précédentes,
- et transmettre l'ensemble de pixels dans lequel le ou les ensemble(s) de pixels identifié(s) au cours des itérations précédentes ont été supprimés en entrée dudit module de recherche, le module de recherche se concentrant lors de l'itération courante sur les seules zones restantes de l'image binaire de ladite itération courante.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

[Fig 1] la figure 1 est un organigramme d'un procédé de segmentation d'au moins une image couleur source représentative d'une centrale photovoltaïque selon la présente invention.
[Fig 2] la figure 2 illustre trois plages dynamiques d'une même image associées respectivement à trois itérations d'une partie des étapes du procédé illustré par la figure 1;
[Fig 3] la figure 3 illustre schématiquement l'étape de suppression selon la présente invention.

Le procédé de segmentation d'au moins une image couleur source représentative d'une centrale photovoltaïque selon la présente invention est propre à être mis en oeuvre par un dispositif électronique, non représenté, de segmentation d'au moins une image couleur source, d'un type spécifique, à savoir une image couleur représentative d'une centrale photovoltaïque comprenant M modules photovoltaïques, M étant un entier.

Un tel dispositif électronique de segmentation d'au moins une image couleur source représentative d'une centrale photovoltaïque, comprend tout d'abord un premier module de conversion, configuré pour convertir ladite image couleur source en une image en niveau de gris, en remplaçant, pour chaque pixel de ladite image couleur, les niveaux de rouge, vert et bleu par une seule valeur de niveau de gris comprise entre 0 et 255, le 0 correspondant à un niveau blanc et le 255 correspondant à un niveau noir.

Le dispositif électronique de segmentation d'au moins une image couleur source représentative d'une centrale photovoltaïque selon la présente invention comprend en outre un premier module de détermination configuré pour déterminer une dimension en pixels minimale et une dimension en pixels maximale desdits M modules photovoltaïques, et un deuxième module de détermination d'un premier ensemble de N bornes minimales de valeurs de niveau de gris et d'un deuxième ensemble de Q bornes maximales de valeurs de niveau de gris.

De plus, selon la présente invention, un tel dispositif électronique de segmentation d'au moins une image couleur source représentative d'une centrale photovoltaïque comprend également un deuxième module de conversion configuré pour convertir ladite image en niveau de gris en une image binaire, en associant, pour un couple formé d'une desdites N bornes minimales et d'une desdites Q bornes maximales :

- chaque pixel, dont le niveau de gris est entre les bornes dudit couple, à une première valeur binaire représentative de la détection d'un pixel de module photovoltaïque, et
- chaque pixel, dont le niveau de gris est en dehors desdites bornes dudit couple, à la valeur binaire complémentaire de ladite première valeur binaire, ladite valeur binaire complémentaire étant représentative de l'absence de détection d'un pixel de module photovoltaïque.

En outre, un tel dispositif électronique de segmentation d'au moins une image couleur source représentative d'une centrale photovoltaïque comprend aussi un module de recherche, configuré pour rechercher, à partir de ladite dimension en pixels minimale et de ladite dimension en pixels maximale desdits M modules photovoltaïques, des ensemble(s) distinct(s) de pixels, au sein desdits pixels dont la valeur binaire est représentative de la détection d'un pixel de module photovoltaïque, chaque ensemble de pixels recherché correspondant à un desdits M modules photovoltaïques.

Par ailleurs, un tel dispositif électronique de segmentation d'au moins une image couleur source représentative d'une centrale photovoltaïque comprend également un module de mémorisation du ou desdits ensemble(s) de pixels détecté(s) par ledit module de recherche.

Il est à noter que selon la présente invention, lesdits deuxième module de conversion, module de recherche, et module de mémorisation sont propres à réitérer leur traitement respectif pour chaque couple, formé d'une desdites N bornes minimales et d'une desdites Q bornes maximales, et distinct d'un couple à l'autre par au moins une de ses bornes

EP 4 290 454 B1

minimale et/ou maximale, le dispositif électronique de segmentation d'au moins une image couleur source, comprenant en outre un module de suppression configuré pour supprimer au sein d'une itération courante, distincte de la première itération, le ou les ensemble(s) de pixels identifié(s) au cours des itérations précédentes, et pour transmettre l'ensemble de pixels dans lequel le ou les ensemble(s) de pixels identifié(s) au cours des itérations précédentes ont été supprimés en entrée dudit module de recherche, le module de recherche se concentrant lors de l'itération courante sur les seules zones restantes de l'image binaire de ladite itération courante.

Selon un mode de réalisation de l'invention, non représenté, le dispositif électronique de segmentation d'au moins une image couleur source représentative d'une centrale photovoltaïque comprend une unité de traitement d'informations formée par exemple d'une mémoire et d'un processeur associé à la mémoire.

Selon ce mode de réalisation, le premier module de conversion, le premier module de détermination, le deuxième module de détermination, le deuxième module de conversion, le module de recherche, le module de mémorisation et le module de suppression sont réalisés chacun sous forme d'un logiciel, ou d'une brique logicielle, exécutable par le processeur. La mémoire du dispositif électronique de segmentation d'au moins une image couleur source représentative d'une centrale photovoltaïque est alors apte à stocker un premier logiciel de détermination, un deuxième logiciel de détermination, un deuxième logiciel de conversion, un logiciel de recherche, un logiciel de mémorisation et un logiciel de suppression. Le processeur est alors apte à exécuter chacun des logiciels parmi le premier logiciel de détermination, le deuxième logiciel de détermination, le deuxième logiciel de conversion, le logiciel de recherche, le logiciel de mémorisation et un logiciel de suppression.

En variante également non représentée, le premier module de conversion, le premier module de détermination, le deuxième module de détermination, le deuxième module de conversion, le module de recherche, le module de mémorisation et le module de suppression sont réalisés chacun sous forme d'un composant logique programmable, tel qu'un FPGA (de l'anglais *Field Programmable Gate Array*), ou un processeur graphique GPU (de l'anglais *Graphics Processing Unit*), ou encore sous forme d'un circuit intégré, tel qu'un ASIC (de l'anglais *Application Specific Integrated Circuit*).

Lorsque le dispositif électronique de segmentation d'au moins une image couleur source représentative d'une centrale photovoltaïque est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique. Sur le support lisible est alors mémorisé un programme d'ordinateur comprenant des instructions logicielles.

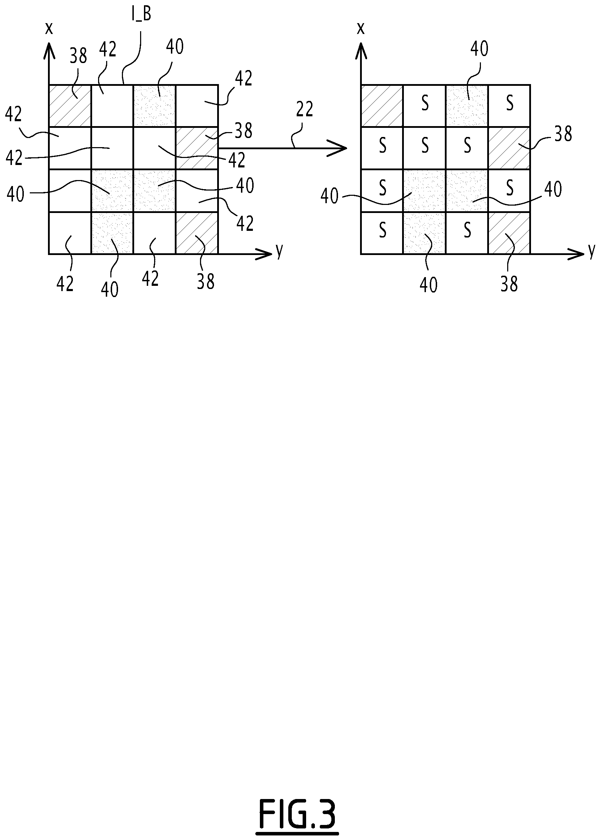

Le fonctionnement d'un tel dispositif électronique de segmentation d'au moins une image couleur source représentative d'une centrale photovoltaïque va maintenant être décrit en référence à la figure 3 qui illustre schématiquement un exemple de mise en œuvre, selon la présente invention, d'un procédé 10 de segmentation d'au moins une image couleur source 12, spécifique car représentative d'une centrale photovoltaïque.

Selon une première étape 14, le dispositif électronique de segmentation d'au moins une image couleur source représentative d'une centrale photovoltaïque, via son premier module de conversion, convertit ladite image couleur source 12 en une image en niveau de gris. Selon la présente invention, ladite conversion CONV_G effectuée au cours de l'étape 14 remplace pour chaque pixel de ladite image couleur source, les niveaux de rouge, vert et bleu (i.e. également appelés niveau RGB de l'anglais *Red Green Blue*) par une seule valeur de niveau de gris comprise entre 0 et 255, le 0 correspondant à un niveau blanc et le 255 correspondant à un niveau noir.

Selon une variante optionnelle, la conversion 14 de ladite image couleur 12 en niveau de gris comprend un floutage non représenté, avantageusement propre à lisser l'image en niveau de gris afin d'éviter la sur-détection des cellule(s) photovoltaïque(s) au sein de chaque module photovoltaïque.

De plus, selon un aspect optionnel de cette variante, un tel floutage est mis en oeuvre au moyen d'un noyau (i.e. également appelé kernel) de taille en pixels prédéterminée, par exemple de quatre pixels par quatre pixels, par rapport à une taille prédéterminée d'une cellule photovoltaïque. Par exemple, en considérant une résolution spatiale de l'image couleur source RGB, telle qu'un pixel est un carré de 2,5cm par 2,5cm (i.e. 2,5mx2,5cm), un module photovoltaïque se caractérisant par exemple par une taille de 1m par 2m (i.e. 1mx2m) ce qui revient à une taille en pixels d'un module photovoltaïque de 40x80=3200 pixels, et qu'un tel module photovoltaïque comprend par exemple soixante-dix cellules photovoltaïques, la taille en pixels prédéterminée de la cellule photovoltaïque à prendre en compte pour le floutage est égale à 45 pixels (3200/70=45, 50 pixels correspondant aux espaces inter-cellule (70*45 = 3150 pixels).

Selon l'étape 16, le dispositif électronique de segmentation d'au moins une image couleur source représentative d'une centrale photovoltaïque, via son deuxième module de détermination, détermine OBT_S un premier ensemble de N bornes minimales de valeurs de niveau de gris et un deuxième ensemble de Q bornes maximales de valeurs de niveau de gris.

Il est à noter, qu'une telle étape 16 est mise en oeuvre parallèlement, préalablement ou encore successivement à l'étape 14 précédemment décrite.

De telles bornes, également appelées seuils permettent de définir les différentes plages dynamiques (également appelées gammes dynamiques) utilisées pour mettre en oeuvre la segmentation multi-seuils proposée selon la présente invention.

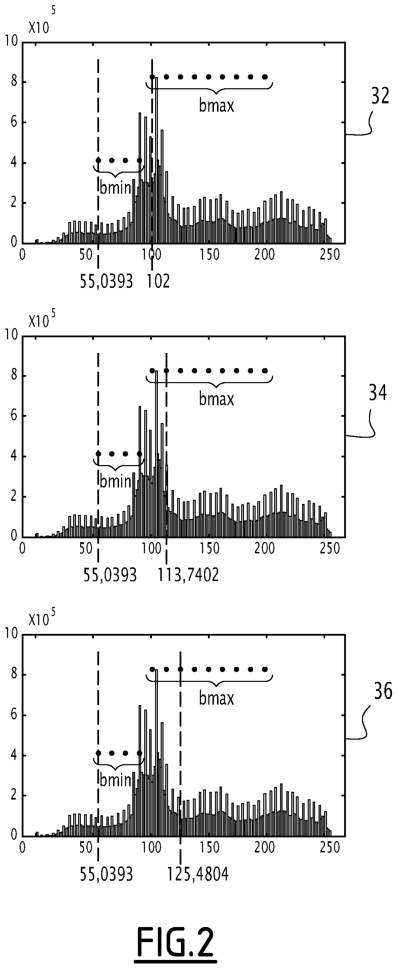

En effet, comme détaillé par la suite en relation avec la figure 2, un couple formé d'une desdites N bornes minimales et d'une desdites Q bornes maximales délimite une plage dynamique correspondant à un intervalle de niveaux de gris localisé entre la borne minimale et la borne maximale du couple considéré.

Les différentes plages dynamiques obtenues, correspondant chaque fois à un couple formé d'une borne minimale desdites N bornes minimale et d'une borne maximale desdites Q bornes maximales, les couples étant distincts deux à deux par au moins la borne minimale et/ou la borne maximale, sont ensuite utilisées pour segmenter itérativement l'image en niveau de gris issue de l'étape 14, au moyen d'une conversion en image binaire comme détaillé par la suite.

En complément optionnel, la détermination OBT_S du premier ensemble de N bornes minimales de valeurs de niveau de gris et du deuxième ensemble de Q bornes maximales de valeurs de niveau de gris, utilise au moins trois paramètres correspondant à une médiane A de valeur de gris de l'image en niveau de gris, un écart type E de valeur de gris de l'image en niveau de gris, et à un pas P inter-borne prédéterminé entre deux bornes successives.

Selon un aspect particulier de ce complément optionnel, le pas P inter-borne est proportionnel audit écart type de valeur de gris de l'image en niveau de gris.

Plus précisément, selon un exemple optionnel de mode de réalisation :

- la première borne minimale $bmin_{i=1}$ dudit premier ensemble de N bornes minimales *bmin* est telle que : $bmin_{i=1} = (A-E)$,
- le pas P entre deux bornes minimales successives est tel que $P=0{,}25*E$, et
- la dernière borne minimale dudit premier ensemble de N bornes minimales est telle que $bmin_{i=N} \leq 0{,}95*A$,
- la première borne maximale $bmax_{j=1}$ dudit deuxième ensemble de Q bornes maximales $bmax$ est telle que : $bmax_{j=1} = A$,
- le pas P entre deux bornes maximales $bmax$ successives est tel que $P=0{,}25*E$, et la dernière borne maximale $bmax$ dudit deuxième ensemble de N bornes maximales est tel que $bmax_{j=Q} \leq A+(2*E)$.

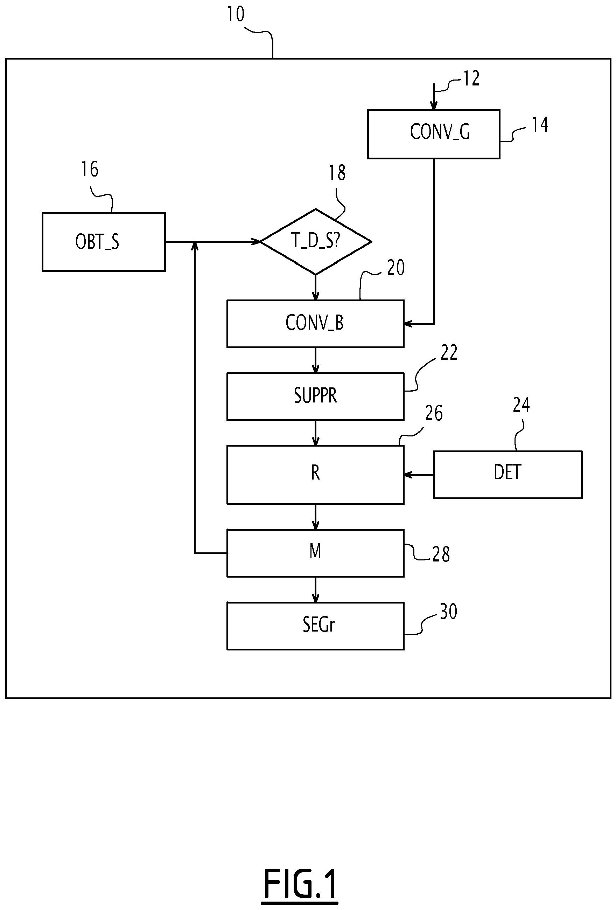

Le procédé de segmentation d'au moins une image couleur source représentative d'une centrale photovoltaïque comprend ensuite, tel qu'illustré par la figure 1, une partie itérative consistant à répéter plusieurs fois un ensemble d'étapes successives.

Plus précisément, lors de l'étape 18, le dispositif électronique de segmentation d'au moins une image couleur source représentative d'une centrale photovoltaïque, détermine si oui ou non tous les couples distincts formés d'une desdites N bornes minimales bmin et d'une desdites Q bornes maximales bmax, les couples formés étant distincts deux à deux par au moins une des bornes minimale et/ou maximale, ont été utilisés selon la présente invention. Comme indiqué précédemment, chaque couple [bmin ; bmax] forme une gamme dynamique (i.e. plage dynamique) de l'image en niveau de gris utilisée ensuite pour convertir ladite image en niveau de gris issue de l'étape 14 en une image binaire lors de l'étape 20.

Autrement dit, lors de l'étape 18, il est testé si oui ou non toutes les différentes plages dynamiques (également appelées gammes dynamiques) utilisées pour mettre en oeuvre la segmentation multi-seuils proposée selon la présente invention ont été utilisées, chaque itération étant associée à un couple [bmin ; bmax] (i.e. une gamme ou plage dynamique) distinct d'une itération à l'autre. Dans la négative, le dispositif électronique de segmentation d'au moins une image couleur source représentative d'une centrale photovoltaïque déclenche une itération suivante.

Par exemple, si lors de l'étape 16, on détermine N=4 bornes minimales et Q=9 bornes maximales bmax, le nombre total de plages dynamiques résultantes est égal à trente-six., les valeurs N=4 et Q=9 étant données à titre d'exemple et permettant d'obtenir un compromis entre temps le temps de calcul et la précision.

Le balayage des différentes plages dynamiques (i.e. de couples [bmin ; bmax] distincts), mis en oeuvre lors de l'étape 18, est propre à être aléatoire du moment que tous les couples [bmin ; bmax] (i.e. une gamme ou plage dynamique) sont utilisés. Dans ce cas de balayage aléatoire, la première itération consiste à prendre aléatoirement un premier couple $[bmin_{i0} ; bmax_{j0}]$ tels que : $1 \leq 5i_0 \leq N$ et $1 \leq 5j_0 \leq Q$.

A titre d'alternative, selon un aspect préférentiel, le balayage de plages dynamiques, mis en oeuvre lors de l'étape 18, est ordonné, notamment selon un principe de deux boucles imbriquées avec une boucle externe consistant à balayer, par exemple les bornes minimales, et une boucle interne consistant à balayer les bornes maximales, ou inversement, selon un autre exemple, avec une boucle externe consistant à balayer les bornes maximales, et une boucle interne consistant à balayer les bornes minimales.

Le principe de deux boucles imbriquées avec, par exemple, une boucle externe consistant à balayer les bornes minimales, et une boucle interne consistant à balayer les bornes maximale, consiste à considérer, selon la boucle externe, la première borne minimale $bmin_{i=1}$ puis, selon la boucle interne, chaque borne maximale $bmax_j$ pour j allant de j=1 à j=Q.

Ainsi, la première itération est associée au couple $[bmin_{i0=1} ; bmax_{j0=1}]$, la $Q^{\text{ème}}$ itération est associée au couple $[bmin_{i=1} ; bmax_{j=Q}]$, la $(Q+1)^{\text{ème}}$ itération est associée au couple $[bmin_{i=2} ; bmax_{j=1}]$, la $(N*Q)^{\text{ème}}$ itération (i.e. la dernière itération) est associée au couple $[bmin_{i=N} ; bmax_{j=Q}]$.

Indépendamment du fait qu'on considère un balayage aléatoire ou ordonné de plages dynamiques (i.e. de couples distincts formés d'une desdites N bornes minimales et d'une desdites Q bornes maximales), lors de la première itération associée au couple d'indices $i_0$ et $j_0$, les quatre étapes 18, 20, 26 et 28 détaillées par la suite sont successivement effectuées, tandis que pour les itérations suivantes distinctes de la première itération, cinq étapes 18, 20, 22, 26 et 28 sont successivement effectuées. Autrement dit, les étapes 20, 26 et 28 sont mise en oeuvre N*Q fois, tandis que l'étape 22 est mise en œuvre une fois de moins soit N*Q-1 fois.

Plus précisément, pour un premier couple formé d'une desdites N bornes minimales $bmin_{i0}$ et d'une desdites Q bornes maximales $bmax_{j0}$, avec les indices $i_0$ et $j_0$ respectivement de borne minimale et de borne maximale dudit premier couple tels que $1 \leq i_0 \leq N$ et $1 \leq j_0 \leq Q$, la première itération est effectuée et comprend tout d'abord une étape 20, selon laquelle le dispositif électronique de segmentation d'au moins une image couleur source représentative d'une centrale photovoltaïque, via son deuxième module de conversion, convertit ladite image en niveau de gris issue de l'étape 14 en une image binaire selon laquelle :

- chaque pixel, dont le niveau de gris est entre les bornes dudit premier couple, est associé à une première valeur binaire représentative de la détection d'un pixel de modules photovoltaïque, et
- chaque pixel, dont le niveau de gris est en dehors desdites bornes dudit premier couple, est associé à la valeur binaire complémentaire de ladite première valeur binaire, ladite valeur binaire complémentaire étant représentative de l'absence de détection d'un pixel de modules photovoltaïque.

Autrement dit, à chaque pixel, dont le niveau de gris G est entre les bornes dudit premier couple, tel que $bmin_{i0} \leq G \leq bmax_{j0}$ la valeur binaire 1 est, par exemple, attribuée et, par exemple, représentée par du blanc représentatif de la détection d'un pixel de modules photovoltaïque, tandis que pour un niveau de gris G en dehors de $[bmin_{i0} ; bmax_{j0}]$ de manière complémentaire, la valeur binaire 0 est, par exemple, attribuée et, par exemple, représentée par du noir.

Lors de cette première itération associée, au premier couple $[bmin_{i0} ; bmax_{j0}]$, l'étape 20 de conversion de ladite image en niveau de gris en une image binaire, n'est pas, comme illustré sur la figure 1, suivie par l'étape 22 de suppression décrite par la suite, car cette étape 22 ne peut être mise en oeuvre qu'à partir de la deuxième itération.

Le procédé selon la présente invention comprend par ailleurs une étape 24, selon laquelle le dispositif électronique de segmentation d'au moins une image couleur source représentative d'une centrale photovoltaïque, via son premier module de détermination, détermine une dimension en pixels minimale et une dimension en pixels maximale desdits M modules photovoltaïques.

Il est à noter qu'une telle étape 24 de détermination DET est mise en oeuvre une seule fois pour toutes les itérations des étapes 18, 20, 22, 26 et 28. Une telle étape 24 est mise en oeuvre parallèlement, préalablement ou encore successivement aux étapes 14 et 16 précédemment décrites, et à minima préalablement à l'étape 26 de la première itération.

Selon un aspect optionnel, la détermination 24 d'une dimension en pixels minimale et d'une dimension en pixels maximale desdits M modules photovoltaïques utilise les métadonnées de ladite image couleur source et l'inclinaison $\alpha$ de chaque module photovoltaïque.

A titre d'exemple illustratif et non limitatif, une telle métadonnée correspond à la résolution spatiale de l'image couleur source RGB. Selon cet exemple, on considère qu'un pixel est un carré de 2,5cm par 2,5cm (i.e. 2,5mx2,5cm). Un module photovoltaïque se caractérise par exemple par une taille de 1m par 2m (i.e. 1mx2m) ce qui revient à une taille en pixels d'un module photovoltaïque de 40x80=3200 pixels, et comprend par exemple soixante-dix cellules photovoltaïques de taille en pixels égale à 45 pixels (3200/70=45, 50 pixels correspondant aux espaces inter-cellule (70*45 = 3150 pixels). Si l'on considère qu'un tel module photovoltaïque est incliné d'un angle $\alpha$, la surface $S_p$ projetée en pixels est telle que $S_p = S*\cos(\alpha)$, avec S = 3200 pixels la surface en pixels du module « à plat ». Ainsi si $\alpha$=30°, $S_p = S*\cos\alpha = 3200\cos(30°) = 2771$ pixels, et en utilisant une marge de sécurité, par exemple de 10% on obtient une surface projetée minimale $S_{p\_min} = S*\cos(\alpha)*0,9 = 2493$ pixels, et une surface projetée maximale $S_{p\_max} = S*\cos(\alpha)*1,1 = 3520$ pixels.

En effet, grâce aux données constructeur, la dimension minimale (i.e. largeur) et la dimension maximale (i.e. longueur) exprimées en mètre desdits M modules photovoltaïques est connue, de même que l'information sur l'inclinaison des modules de la centrale photovoltaïque considérée et capturée au moyen de ladite image couleur source. Grâce au calcul géométrique simple on arrive à déterminer la taille minimale et maximale des modules photovoltaïques.

Lors de la première itération, l'étape 20 de conversion de ladite image en niveau de gris en une image binaire est ensuite directement suivie par une étape 26, selon laquelle le dispositif électronique de segmentation d'au moins une image couleur source représentative d'une centrale photovoltaïque, via son module de recherche, recherche des ensemble(s) distinct(s) de pixels, au sein desdits pixels dont la valeur binaire est représentative de la détection d'un pixel de modules photovoltaïque, chaque ensemble de pixels recherché correspondant à un desdits M modules photovoltaïques, ladite étape 26 étant effectuée à partir de la dimension en pixels minimale et de la dimension en pixels maximale desdits M modules photovoltaïques déterminée lors de l'étape 24 précédemment décrite.

Autrement dit, une telle étape de recherche R permet de séparer correctement dans l'image binaire fournie à l'issue de l'étape 20 les pixels associés à deux modules photovoltaïques distincts.

En complément optionnel, ladite recherche 26 d'ensemble(s) distinct(s) de pixels, chaque ensemble de pixels recherché correspondant à un desdits M modules photovoltaïques comprend :

- la formation de régions distinctes regroupant chacune une partie distincte desdits pixels dont la valeur binaire est représentative de la détection d'un pixel de module photovoltaïque, chaque région présentant une dimension en pixels minimale et une dimension en pixels maximale respectivement sensiblement égales à ladite dimension en pixels minimale et à ladite dimension en pixels maximale desdits M modules photovoltaïques,
- l'extraction des propriétés de chaque région ;
- pour chaque région, la vérification de la conformité desdites propriétés aux propriétés associées à une image de référence de module photovoltaïque, et dans l'affirmative la validation de ladite région comme ensemble de pixels recherché correspondant à un desdits M modules photovoltaïques.

Par exemple, une telle recherche est mise en oeuvre en utilisant la fonction « regionprops » de l'outil de calcul numérique MATLAB®, telle que décrite par l'URL suivante https://fr.mathworks.com/help/images/ref/regionprops.html est propre à être utilisée pour mettre en oeuvre cette étape 26 de recherche.

Puis suite à cette étape 26 de recherche R, une étape 28 est mise en oeuvre par le dispositif électronique de segmentation d'au moins une image couleur source représentative d'une centrale photovoltaïque, via son module de mémorisation dédié, pour Mémoriser M le ou lesdits ensemble(s) de pixels détecté(s) au cours de ladite recherche 26. Il est à noter qu'avant l'étape 28 de la première itération, l'espace mémoire dédié au stockage du ou des ensemble(s) de pixels détecté(s) au cours de ladite étape de recherche 26 est vide et qu'il se remplit à l'issue de chaque itération de l'étape 28. Autrement dit, à chaque itération, le ou les ensemble(s) de pixels détecté(s) au cours de ladite étape de recherche 26 sont accumulés au sein dudit espace mémoire dédié.

Puis, tel qu'illustré par la figure 1, pour chaque autre couple, distinct dudit premier couple [$bmin_{i0}$; $bmax_{j0}$] par au moins une des bornes minimale et/ou maximale, selon le procédé de la présente invention, il y a réitération des étapes précédentes de conversion 20 en image binaire, recherche 26, et mémorisation 28, une étape 22 de suppression SUPPR, au sein d'une itération courante, distincte de la première itération, du ou des ensemble(s) de pixels identifié(s) au cours des itérations précédentes étant mise en œuvre entre l'étape de conversion en image binaire 24 et l'étape de recherche 26.

Une telle étape de suppression 22 permet d'éviter les doublons de détection comme illustré plus en détail par la suite en relation avec la figure 3. Autrement dit, la suppression 22 permet du supprimer de l'ensemble de pixels (i.e. de la zone de recherche) issue de l'étape 20 le ou les ensemble(s) de pixels détecté(s) au cours des itérations précédentes, afin que la recherche se concentre pour trouver un ou des ensemble(s) de pixels qui n'ont pas été détectés lors des itérations précédentes. En effet, dès la deuxième itération et à chaque itération suivante, le contenu complet de l'espace mémoire dédié à la mémorisation du ou des ensemble(s) de pixels identifié(s) à chaque itération, est transmis à l'issue de l'étape 28 d'une itération courante en entrée de l'itération suivante, déclenchée lors de l'étape 18 s'il reste au moins une gamme dynamique, déterminée lors de l'étape 16, à utiliser pour segmenter l'image en niveau de gris issue de l'étape 14.

Autrement dit, selon la présente invention, on entend par « suppression au sein (de l'image binaire) d'une itération courante, distincte de la première itération, du ou des ensemble(s) de pixels identifié(s) au cours des itérations précédentes » on entend la formation de la zone d'analyse (i.e. la zone de recherche) de l'image binaire d'une itération courante à prendre en compte en entrée de l'étape de recherche, cette zone d'analyse (i.e. zone de recherche) étant réduite d'une itération à l'autre en supprimant de cette zone d'analyse (i.e. de l'ensemble de pixels constituant la zone de recherche) le ou les ensemble(s) de pixels identifié(s) au cours des itérations précédentes.

Lorsque lors de l'étape 18, le dispositif électronique de segmentation d'au moins une image couleur source représentative d'une centrale photovoltaïque, détermine que la dernière itération des étapes 20, 22, 26 et 28 va être mise en œuvre, l'étape 28 est suivie d'une étape finale 30 de génération et/ou affichage d'une image couleur segmentée SEGr dans laquelle chaque ensemble(s) de pixels correspondant à l'un des M modules photovoltaïques présente un marqueur, par exemple via un motif tel qu'une croix ou un point de couleur prédéterminée, indiquant qu'il a été correctement détecté.

Autrement dit, le procédé selon la présente invention permet de transformer une image couleur source représentative d'une centrale photovoltaïque en une image couleur segmentée dans laquelle un marqueur est ajouté par superposition sur chaque ensemble de pixels détecté comme correspondant à l'un des M modules photovoltaïques, et le cas échéant de l'afficher via un écran de restitution à un utilisateur dudit dispositif de segmentation selon la présente invention, ou de la transmettre à un écran d'affichage.

Comme indiqué précédemment, la figure 2 illustre trois plages dynamiques d'une même image associées respectivement à trois itérations d'une partie des étapes du procédé illustré par la figure 1.

Selon cet exemple, on considère notamment qu'au vu de l'histogramme de l'image en niveau de gris issue de l'étape 14, avec pour chaque pixel une valeur de niveau de gris comprise entre 0 et 255, tel que représenté sur les vues 32, 34 et 36, que la médiane de valeur de gris de l'image en niveau de gris est telle que égale A=102, que son écart type E est tel que E = 46,9607, et que le pas P inter-borne (entre bornes minimales comme entre bornes maximales) prédéterminé entre deux bornes successives est tel que P=0,25*E=11,740175.

Ainsi, l'ensemble de N=4 bornes minimales est tel que :

$bmin_{i=1}=(A-E)=55,0393$, $bmin_{i=2}= bmin_{i=1}+P=66,7795$, $bmin_{i=3}= bmin_{i=2}+P=78,5196$, et $bmin_{i=N=4}= bmin_{i=3}+P=90,2598:50,95*A$, et l'ensemble de Q=9 bornes maximales est tel que :

$$bmax_{j=1}=A=102 \; ; bmax_{j=2}= bmax_{j=1}+P=113,7402,$$

$$bmax_{j=3}= bmax_{j=2}+P=125,4804, \; bmax_{j=4}= bmax_{j=3}+P=137,2205,$$

$$bmax_{j=5}= bmax_{j=4}+P=148,9607, \; bmax_{j=6}= bmax_{j=5}+P=160,7009,$$

$$bmax_{j=7}= bmax_{j=6}+P=172,4411, \; bmax_{j=8}= bmax_{j=3}+P=184,1813,$$

$$bmax_{j=9=Q}= bmax_{j=8}+P=195,9214=A+(2*E).$$

Lors de la première itération, la plage dynamique correspondant à l'intervalle de niveaux de gris entre $bmin_{i=1}$=55,0393 et $bmax_{j=1}$=102 est considéré pour mettre en oeuvre l'étape 20 de conversion de ladite image en niveau de gris issue de l'étape 14 en une image binaire. Autrement dit, en considérant, lors de l'itération associée à la vue 32, la plage de niveaux de gris entre $bmin_{i=1}$=55,0393 et $bmax_{j=1}$=102, chaque pixel, dont le niveau de gris est entre les bornes $bmin_{i=1}$=55,0393 et $bmax_{j=1}$=102, est associé à une première valeur binaire, par exemple 1 représentée par du blanc sur l'image binaire et représentative de la détection d'un pixel de modules photovoltaïque, tandis que chaque pixel dont la valeur de niveau de gris est en dehors de l'intervalle de niveau de gris entre les bornes $bmin_{i=1}$=55,0393 et $bmax_{j=1}$=102 est associé à une deuxième valeur binaire complémentaire 0 représentée par du noir sur l'image binaire.

Lors de la deuxième itération associée à la vue 34, la plage dynamique correspondant à l'intervalle de niveaux de gris entre $bmin_{i=1}$=55,0393 et $bmax_{j=2}$=113,7402 est considéré pour mettre en oeuvre l'étape 20 de conversion de ladite image en niveau de gris issue de l'étape 14 en une image binaire.

Lors de la troisième itération associée à la vue 36, la plage dynamique correspondant à l'intervalle de niveaux de gris entre $bmin_{i=1}$=55,0393 et $bmax_{j=3}$=125,4804 est considéré pour mettre en oeuvre l'étape 20 de conversion de ladite image en niveau de gris issue de l'étape 14 en une image binaire, et ainsi de suite jusqu'à la trente sixième itération pour couvrir tous les couples possibles issus des combinaisons distinctes de l'une desdites N=4 bornes minimales et de l'une desdites Q=9 bornes maximales.

La figure 3 illustre schématiquement et de manière simplifiée l'étape de suppression 22 selon la présente invention telle qu'illustrée précédemment par la figure 1, et mise en oeuvre à partir de la deuxième itération.

Plus précisément, après conversion 20 de ladite image en niveau de gris en une image binaire I_B, ladite image I_B comprend sur l'illustration de la figure 3 trois types de zone, des zones 38 comprenant uniquement des pixels noirs, des zones 40 comprenant à la fois des pixels noirs et des pixels blancs et des zones 42 comprenant des pixels blancs et correspondant à des ensembles de pixels détectés lors de l'itération précédente.

L'étape 22 supprime de l'ensemble de pixels correspondant à la zone de recherche les zones 42 de l'image binaire I_B, ces zones supprimées étant représentées par la lettre S sur la vue de droite de la figure 3, afin que l'étape subséquente 26 de recherche soit concentrée sur les seules zones 40 restantes non détectées lors des itérations précédentes et évite des doublons de détection.

L'homme du métier comprendra que l'invention ne se limite pas aux modes de réalisation décrits, ni aux exemples particuliers de la description, les modes de réalisation et les variantes mentionnées ci-dessus étant propres à être combinés entre eux pour générer de nouveaux modes de réalisation de l'invention.

Ainsi, la présente invention propose un procédé et un dispositif de segmentation d'au moins une image couleur source représentative d'une centrale photovoltaïque spécifiquement adapté à l'identification segmentée de modules photovoltaïques

La présente invention offre des résultats prouvés quasi-optimaux en permettant de détecter 99% des modules photovoltaïques, ce qui revient à exploiter l'ensemble de l'information de l'image source en extrayant un maximum de modules de la centrale photovoltaïque considérée.

**Revendications**

1. Procédé (10) de segmentation d'au moins une image couleur source représentative d'une centrale photovoltaïque comprenant M modules photovoltaïques, M étant un entier, le procédé étant mis en oeuvre par un dispositif électronique de segmentation d'au moins une image, et comprenant les étapes suivantes :

   - conversion (14) de ladite image couleur source en une image en niveau de gris, ladite conversion remplaçant, pour chaque pixel de ladite image couleur, les niveaux de rouge, vert et bleu par une seule valeur de niveau de gris comprise entre 0 et 255, le 0 correspondant à un niveau blanc et le 255 correspondant à un niveau noir ;
   - détermination (24) d'une dimension en pixels minimale et d'une dimension en pixels maximale desdits M modules photovoltaïques ;
   - détermination (16) d'un premier ensemble de N bornes minimales de valeurs de niveau de gris et d'un deuxième ensemble de Q bornes maximales de valeurs de niveau de gris ;
   - pour un premier couple formé d'une desdites N bornes minimales $bmin_{i0}$ et d'une desdites Q bornes maximales $bmax_{j0}$, avec les indices $i_0$ et $j_0$ respectivement de borne minimale et de borne maximale dudit premier couple tels que $1 \leq i_0 \leq N$ et $1 \leq j_0 \leq Q$, première itération des étapes successives suivantes :

      - conversion (20) de ladite image en niveau de gris en une image binaire selon laquelle :

         - chaque pixel, dont le niveau de gris est entre les bornes dudit premier couple, est associé à une première valeur binaire représentative de la détection d'un pixel de modules photovoltaïque, et
         - chaque pixel, dont le niveau de gris est en dehors desdites bornes dudit premier couple, est associé à la valeur binaire complémentaire de ladite première valeur binaire, ladite valeur binaire complémentaire étant représentative de l'absence de détection d'un pixel de modules photovoltaïque ;

         - à partir de ladite dimension en pixels minimale et de ladite dimension en pixels maximale desdits M modules photovoltaïques, recherche (26) d'ensemble(s) distinct(s) de pixels, au sein desdits pixels dont la valeur binaire est représentative de la détection d'un pixel de modules photovoltaïque, chaque ensemble de pixels recherché correspondant à un desdits M modules photovoltaïques,
         - mémorisation (28) du ou desdits ensemble(s) de pixels détecté(s) au cours de ladite recherche,

   pour chaque autre couple, distinct dudit premier couple par au moins une des bornes minimale et/ou maximale, réitération des étapes précédentes de conversion en image binaire, recherche, et mémorisation, une étape de suppression (22), au sein d'une itération courante, distincte de la première itération, du ou des ensemble(s) de pixels identifié(s) au cours des itérations précédentes étant mise en oeuvre entre l'étape de conversion en image binaire et l'étape de recherche, l'étape de recherche se concentrant lors de l'itération courante sur les seules zones restantes de l'image binaire de ladite itération courante.

2. Procédé selon la revendication 1, dans lequel la conversion de ladite image couleur en niveau de gris comprend un floutage.

3. Procédé selon la revendication 2, dans lequel ledit floutage est mis en oeuvre au moyen d'un noyau de taille en pixels prédéterminée par rapport à une taille prédéterminée de cellule photovoltaïque.

4. Procédé selon l'une quelconque des revendications précédentes, dans lequel la détermination du premier ensemble de N bornes minimales de valeurs de niveau de gris et du deuxième ensemble de Q bornes maximales de valeurs de niveau de gris, utilise au moins trois paramètres correspondant à une médiane A de valeur de gris de l'image en niveau de gris, un écart type E de valeur de gris de l'image en niveau de gris, et à un pas P inter-borne prédéterminé entre deux bornes successives.

5. Procédé selon la revendication 4, dans lequel ledit pas est proportionnel audit écart type de valeur de gris de l'image en niveau de gris.

6. Procédé selon la revendication 5, dans lequel la première borne minimale $bmin_{i=1}$ dudit premier ensemble de N bornes minimales est telle que : $bmin_{i=1} = (A-E)$, le pas P entre deux bornes minimales successives est tel que $P = 0{,}25*E$, et la dernière borne minimale dudit premier ensemble de N bornes minimales est tel que $bmin_{i=N} \leq 0{,}95*A$, et dans lequel la première borne maximale $bmax_{j=1}$ dudit deuxième ensemble de Q bornes maximales est telle que : $bmax_{j=1} = A$, le pas P entre deux bornes maximales successives est tel que $P = 0{,}25*E$, et la dernière borne maximale dudit deuxième ensemble de N bornes maximales est tel que $bmax_{j=Q} \leq A+(2*E)$.

7.  Procédé selon l'une quelconque des revendications précédentes, dans lequel la détermination d'une dimension en pixels minimale et d'une dimension en pixels maximale desdits M modules photovoltaïques utilise les métadonnées de ladite image couleur source et l'inclinaison de chaque module photovoltaïque.

8.  Procédé selon l'une quelconque des revendications précédentes, dans lequel ladite recherche d'ensemble(s) distinct(s) de pixels, chaque ensemble de pixels recherché correspondant à un desdits M modules photovoltaïques comprend :

    - la formation de régions distinctes regroupant chacune une partie distincte desdits pixels dont la valeur binaire est représentative de la détection d'un pixel de module photovoltaïque, chaque région présentant une dimension en pixels minimale et une dimension en pixels maximale respectivement sensiblement égales à ladite dimension en pixels minimale et à ladite dimension en pixels maximale desdits M modules photovoltaïques,
    - l'extraction des propriétés de chaque région ;
    - pour chaque région, la vérification de la conformité desdites propriétés aux propriétés associées à une image de référence de module photovoltaïque, et dans l'affirmative la validation de ladite région comme ensemble de pixels recherché correspondant à un desdits M modules photovoltaïques.

9.  Programme d'ordinateur comportant des instructions comportant des instructions logicielles qui, lorsqu'elles sont exécutées par un dispositif électronique programmable, mettent en oeuvre un procédé de segmentation d'au moins une image couleur source représentative d'une centrale photovoltaïque comprenant M modules photovoltaïques conforme aux revendications 1 à 8.

10. Dispositif électronique de segmentation d'au moins une image couleur source représentative d'une centrale photovoltaïque comprenant M modules photovoltaïques, M étant un entier, le dispositif électronique d'au moins une image couleur source, comprenant :

    - un premier module de conversion, configuré pour convertir ladite image couleur source en une image en niveau de gris, en remplaçant, pour chaque pixel de ladite image couleur, les niveaux de rouge, vert et bleu par une seule valeur de niveau de gris comprise entre 0 et 255, le 0 correspondant à un niveau blanc et le 255 correspondant à un niveau noir ;
    - un premier module de détermination configuré pour déterminer une dimension en pixels minimale et une dimension en pixels maximale desdits M modules photovoltaïques ;
    - un deuxième module de détermination d'un premier ensemble de N bornes minimales de valeurs de niveau de gris et d'un deuxième ensemble de Q bornes maximales de valeurs de niveau de gris ;
    - un deuxième module de conversion configuré pour convertir ladite image en niveau de gris en une image binaire, en associant, pour un couple formé d'une desdites N bornes minimales et d'une desdites Q bornes maximales:

        - chaque pixel, dont le niveau de gris est entre les bornes dudit couple, à une première valeur binaire représentative de la détection d'un pixel de module photovoltaïque, et
        - chaque pixel, dont le niveau de gris est en dehors desdites bornes dudit couple, à la valeur binaire complémentaire de ladite première valeur binaire, ladite valeur binaire complémentaire étant représentative de l'absence de détection d'un pixel de module photovoltaïque ;

    - un module de recherche, configuré pour rechercher, à partir de ladite dimension en pixels minimale et de ladite dimension en pixels maximale desdits M modules photovoltaïques, des ensemble(s) distinct(s) de pixels, au sein desdits pixels dont la valeur binaire est représentative de la détection d'un pixel de module photovoltaïque, chaque ensemble de pixels recherché correspondant à un desdits M modules photovoltaïques,
    - un module de mémorisation du ou desdits ensemble(s) de pixels détecté(s) par ledit module de recherche, lesdits deuxième module de conversion, module de recherche, et module de mémorisation étant propres à réitérer leur traitement respectif pour chaque couple, formé d'une desdites N bornes minimales et d'une desdites Q bornes maximales, et distinct d'un couple à l'autre par au moins une de ses bornes minimale et/ou maximale, le dispositif électronique de segmentation d'au moins une image couleur source, comprenant en outre un module de suppression configuré pour :

        - supprimer au sein d'une itération courante, distincte de la première itération, le ou les ensemble(s) de pixels identifié(s) au cours des itérations précédentes, le module de recherche se concentrant lors de l'itération courante sur les seules zones restantes de l'image binaire de ladite itération courante ;
- et transmettre l'image binaire dans laquelle le ou les ensemble(s) de pixels identifié(s) au cours des itérations précédentes ont été supprimés en entrée dudit module de recherche.

**Patentansprüche**

1. Verfahren (10) zur Segmentierung mindestens eines Quellfarbbilds, das repräsentativ für eine Photovoltaikkraftwerk mit M Solarmodulen ist, wobei M eine ganze Zahl ist, wobei das Verfahren von einer elektronischen Vorrichtung zur Segmentierung mindestens eines Bilds durchgeführt wird, und umfassend die folgenden Schritte:

   - Umwandeln (14) des Quellfarbbilds in ein Graustufenbild, wobei die Umwandlung für jedes Pixel des Farbbilds der Rot-, Grün- und Blaustufe durch einen einzigen Graustufenwert zwischen 0 und 255 ersetzt, wobei 0 einer Weißstufe und 255 einer Schwarzstufe entspricht;
   - Bestimmen (24) einer minimalen Pixelgröße und einer maximalen Pixelgröße der M Solarmodule;
   - Bestimmen (16) eines ersten Satzes von N Minimalgrenzen für Graustufenwerte und eines zweiten Satzes von Q Maximalgrenzen für Graustufenwerte;
   - für ein erstes Paar, das aus einem der N Minimalgrenzen $bmin_{i0}$ und einem der Q Maximalgrenzen $bmax_{jo}$ gebildet ist, wobei die Indizes $i_0$ und $j_0$ der Minimalgrenze und der Maximalgrenze des ersten Paars, wie beispielsweise $1 \leq i_0 \leq N$ und $1 \leq j_0 \leq Q$ sind, eine erste Iteration der folgenden aufeinanderfolgenden Schritte:

      - Umwandeln (20) des Graustufenbilds in ein Binärbild, wonach:

         - jedes Pixel, dessen Graustufe zwischen den Grenzen des ersten Paars liegt, mit einem ersten Binärwert assoziiert ist, der repräsentativ für die Erkennung eines Pixels von Solarmodulen ist, und
         - jedes Pixel, dessen Graustufe außerhalb der Grenzen des ersten Paars ist, mit dem komplementären Binärwert des ersten Binärwerts assoziiert ist, wobei der komplementäre Binärwert repräsentativ für die fehlende Erkennung eines Pixels von Solarmodulen ist;

      - anhand der minimalen Pixelgröße und der maximalen Pixelgröße der M Solarmodule, Suchen (26) eines oder mehrerer separater Sätze von Pixeln innerhalb der Pixel, deren Binärwert repräsentativ für die Erkennung eines Pixels von Solarmodulen ist, wobei jeder gesuchte Satz von Pixeln einem der M Solarmodule entspricht,
      - Speichern (28) des oder der Sätze von Pixeln, die während der Suche erkannt werden,

   für jedes weitere Paar, das sich von dem ersten Paar durch mindestens eine der Minimal- und/oder Maximalgrenze unterscheidet, Wiederholen der vorherigen Schritte eines Umwandelns in ein Binärbild, Suchens und Speicherns, eines Löschschritts (22) innerhalb einer aktuellen Iteration, die sich von der ersten Iteration unterscheidet, des oder der in den vorherigen Iterationen identifizierten Sätze von Pixeln zwischen dem Schritt eines Umwandelns in ein Binärbild und dem Schritt eines Suchens durchgeführt wird, wobei sich der Schritt eines Suchens in der laufenden Iteration nur auf die verbleibenden Bereiche des Binärbilds der laufenden Iteration konzentriert.

2. Verfahren nach Anspruch 1, wobei die Umwandlung des Farbbilds in Graustufen eine Verpixelung umfasst.

3. Verfahren nach Anspruch 2, wobei die Verpixelung mittels eines Kerns mit einer vorbestimmten Pixelgröße in Bezug auf eine vorbestimmte Größe der Solarzelle implementiert wird.

4. Verfahren nach einem der vorherigen Ansprüche, wobei die Bestimmung des ersten Satzes von N Minimalgrenzen für Graustufenwerte und des zweiten Satzes von Q Maximalgrenzen für Graustufenwerte mindestens drei Parameter verwendet, die einem Median A des Grauwerts des Graustufenbilds, einer Standardabweichung E des Grauwerts des Graustufenbilds und einem vorbestimmten Zwischengrenzabstand P zwischen zwei aufeinanderfolgenden Grenzen entsprechen.

5. Verfahren nach Anspruch 4, wobei der Abstand proportional zur Standardabweichung des Grauwerts des Graustufenbilds ist.

6. Verfahren nach Anspruch 5, wobei die erste Minimalgrenze $bmin_{i=1}$ des ersten Satzes von N Minimalgrenzen derart ist, dass: $bmin_{i=1} = (A-E)$, der Abstand P zwischen zwei aufeinanderfolgenden Minimalgrenzen derart ist, dass P=0,25*E, und die letzte Minimalgrenze des ersten Satzes von N Minimalgrenzen derart ist, dass $bmin_{i=N} \leq 0,95*A$, und wobei die erste Maximalgrenze $bmax_{j=1}$, des zweiten Satzes von Q Maximalgrenzen derart ist, dass: $bmax_{j=1} = A$, der Abstand P zwischen zwei aufeinanderfolgenden Maximalgrenzen derart ist, dass P=0,25*E, und die letzte Maximalgrenze des zweiten Satzes von N Maximalgrenzen derart ist, dass $bmax_{j=Q} \leq A+(2*E)$.

7.  Verfahren nach einem der vorherigen Ansprüche, wobei die Bestimmung einer minimalen Pixelgröße und einer maximalen Pixelgröße der M Solarmodule die Metadaten des Quellfarbilds und die Neigung von jedem Solarmodul verwendet.

8.  Verfahren nach einem der vorherigen Ansprüche, wobei die Suche eines oder mehrerer separater Sätze von Pixeln, wobei jeder gesuchte Satz von Pixeln einem der M Solarmodule entspricht, Folgendes umfasst:

    - Bilden von separaten Regionen, die jeweils einen separaten Teil der Pixel zusammenfassen, deren Binärwert repräsentativ für die Erkennung eines Pixels eines Solarmoduls ist, wobei jede Region eine minimale Pixelgröße und eine maximale Pixelgröße aufweist, die jeweils im Wesentlichen gleich wie die minimale Pixelgröße und die maximale Pixelgröße der M Solarmodule sind,
    - die Extrahieren der Eigenschaften jeder Region;
    - für jede Region, das Überprüfen, ob die Eigenschaften mit den Eigenschaften übereinstimmen, die mit einem Referenzbild eines Solarmoduls assoziiert sind, und wenn ja, das Validieren der Region als ein Satz gesuchter Pixel, die einem der M Solarmodule entsprechen.

9.  Computerprogramm, umfassend Anweisungen, umfassend Softwareanweisungen, die, wenn sie von einer programmierbaren elektronischen Vorrichtung ausgeführt werden, ein Verfahren zur Segmentierung von mindestens einem repräsentativen Quellenfarbbild einer Photovoltaikanlage umfassend M Solarmodulen gemäß den Ansprüchen 1 bis 8 implementieren.

10. Elektronische Vorrichtung zur Segmentierung mindestens eines Quellfarbilds, das repräsentativ für eine Photovoltaikkraftwerk ist, umfassend M Solarmodule, wobei M eine ganze Zahl ist, wobei die elektronische Vorrichtung mindestens eines Quellfarbbilds, Folgendes umfasst:

    - - ein erstes Umwandlungsmodul, das konfiguriert ist, um das Quellenfarbbild in ein Graustufenbild umzuwandeln, indem es für jedes Pixel des Farbbilds die Rot-, Grün- und Blaustufe durch einen einzigen Graustufenwert zwischen 0 und 255 ersetzt, wobei 0 einer Weißstufe und 255 einer Schwarzstufe entspricht;
    - ein erstes Bestimmungsmodul, das konfiguriert ist, um eine minimale Pixelgröße und eine maximale Pixelgröße der M Solarmodule zu bestimmen;
    - ein zweites Bestimmungsmodul eines ersten Satzes von N Minimalgrenzen für Graustufenwerte und eines zweiten Satzes von Q Maximalgrenzen für Graustufenwerte;
    - ein zweites Umwandlungsmodul, das konfiguriert ist, um das Graustufenbild in ein Binärbild umzuwandeln, indem es für ein Paar, das aus einem der N Minimalgrenzen und einem der Q Maximalgrenzen gebildet ist, Folgendes assoziiert:

        - jedes Pixel, dessen Graustufe zwischen den Grenzen des Paars ist, auf einen ersten Binärwert, der repräsentativ für die Erkennung eines Pixels eines Solarmoduls ist, und
        - jedes Pixel, dessen Graustufe außerhalb der Grenzen des Paars ist, auf den komplementären Binärwert des ersten Binärwerts, wobei der komplementäre Binärwert repräsentativ für die fehlende Erkennung eines Solarmodul-Pixels ist;

    - ein Suchmodul, das konfiguriert ist, um anhand der minimalen Pixelgröße und der maximalen Pixelgröße der M Solarmodule einen oder mehrere separate Sätzen von Pixeln innerhalb der Pixel zu suchen, deren Binärwert repräsentativ für die Erkennung eines Solarmodul-Pixels ist, wobei jeder gesuchte Satz von Pixeln einem der M Solarmodule entspricht,
    - ein Modul zum Speichern des oder der Sätze von Pixeln, die von dem Suchmodul erkannt werden, wobei das zweite Umwandlungsmodul, das Suchmodul und das Speichermodul geeignet sind, um ihre jeweilige Verarbeitung für jedes Paar zu wiederholen, das aus einem der N Minimalgrenzen und einem der Q Maximalgrenzen gebildet ist und sich von einem Paar zum anderen durch mindestens eine seiner Minimal- und/oder Maximalgrenze unterscheidet, die elektronische Vorrichtung zur Segmentierung mindestens eines Quellfarbbilds, ferner umfassend ein Löschmodul, das zu Folgendem konfiguriert ist:

- Löschen, innerhalb einer aktuellen Iteration, die sich von der ersten Iteration unterscheidet, des oder der Sätze von Pixeln, die in den vorherigen Iterationen identifiziert wurden, wobei sich das Suchmodul während der aktuellen Iteration nur auf die verbleibenden Bereiche des Binärbilds der aktuellen Iteration konzentriert;
- und Übertragen des Binärbilds, in dem der oder die Sätze von Pixeln, die im Verlauf vorheriger Iterationen identifiziert wurden, gelöscht worden sind, an den Eingang des Suchmoduls.

**Claims**

1. - A method (10) of segmentation of at least one color source image representative of a photovoltaic unit comprising M photovoltaic modules, M being an integer, the method being implemented by an electronic device for segmenting at least one image, and comprising the following steps

   - conversion (14) of said color source image into a grayscale image, said conversion replacing, for each pixel of said color image, the red, green and blue scales with only one grayscale value comprised between 0 and 255, 0 corresponding to a white and 255 corresponding to black;
   - determination (24) of a minimum pixel dimension and of a maximum pixel dimension of said M photovoltaic modules;
   - determination (16) of a first set of N minimum bounds of grayscale values and of a second set of Q maximum bounds of grayscale values;
   - for a first pair formed by one of said N minimum bounds $bmin_{i_0}$ and one of said Q maximum bounds $bmax_{j_0}$, with the indices $i_0$ and $j_0$, respectively, of minimum and maximum bounds of said first pair such that $1 \leq i_0 \leq N$ and $1 \leq j_0 \leq Q$, first iteration of the following successive steps:

      - conversion (20) of said grayscale image into a binary image according to which

         - each pixel, the grayscale of which is between the bounds of said first pair, is associated with a first binary value representative of the detection of a pixel of photovoltaic modules, and
         - each pixel, the grayscale of which is outside said bounds of said first pair, is associated with the complementary binary value of said first binary value, said complementary binary value being representative of the absence of detection of a pixel of photovoltaic modules;
         - from said minimum pixel dimension and said maximum pixel dimension of said M photovoltaic modules, search (26) for distinct set(s) of pixels within said pixels, the binary value of which is representative of the detection of a pixel of photovoltaic modules, each set of pixels sought corresponding to one of said M photovoltaic modules,
         - storage (28) of said set(s) of pixels detected during said search,

   for each other pair, distinct from said first pair by at least one of the minimum and/or maximum bounds , reiteration of the preceding steps of conversion into a binary image, search and storage, a step of deleting (22), within a current iteration, distinct from the first iteration, of the set(s) of pixels identified during the preceding iterations being implemented between the step of conversion into a binary image and the search step, the search step focusing during the current iteration only on the remaining zones of said current binary image.

2. - The method according to claim 1, wherein the conversion of said color image to a grayscale comprises blurring.

3. The method according to claim 2, wherein said blurring is carried out by means of a kernel of predetermined pixel size relative to a predetermined photovoltaic cell size.

4. The method according to any of the preceding claims, wherein the determination of the first set of N minimum grayscale value bounds and the second set of Q maximum grayscale value bounds uses at least three parameters corresponding to a grayscale value median A of the grayscale image, a grayscale image standard deviation E, and a predetermined inter-bound step P between two successive bounds.

5. - The method according to claim 4, wherein said step is proportional to said standard deviation of grayscale value of the grayscale image.

6. - The method according to claim 5, wherein the first minimum bound $bmin_{i=1}$ of said first set of N minimum bounds is such that: $bmin_{i=1} = (A-E)$, the step P between two successive minimum bounds being such that $P=0.25*E$, and the last minimum bound of said first set of N minimum bounds being such that $bmin_{i=N} \leq 0.95*A$,
and wherein the first maximum bound $bmax_{j=1}$ of said second set of Q maximum bounds is such that: bmax=A, the step P between two successive maximum bounds being such that P=0.25*E. and the last maximum bound of said second set of N maximum bounds being such that $bmax_j=Q=A+(2*E)$.

7. - A method according to any of the preceding claims, wherein the determination of a minimum pixel size and a maximum pixel size of said M photovoltaic modules uses the metadata of said color source image and the inclination of each photovoltaic module.

8. - The method according to any of the preceding claims, wherein said search for distinct pixel set(s), each sought pixel set corresponding to one of said M photovoltaic modules comprises

- the formation of distinct regions each grouping together a distinct part of said pixels the binary value of which is representative of the detection of a pixel of a photovoltaic module, each region having a minimum pixel dimension and a maximum pixel dimension substantially equal to said minimum pixel dimension and to said maximum pixel dimension, respectively, of said M photovoltaic modules,
- the extraction of the properties of each region;
- for each region, the verification of the conformity of said properties with the properties associated with a reference image of a photovoltaic module, and if the answer is yes, the validation of said region as a set of sought pixels corresponding to one of said M photovoltaic modules.

9. - A computer program including instruction including software instructions which, when executed by a programmable electronic system, implement a method of segmentation of at least one color source image representative of a photovoltaic unit comprising M photovoltaic modules according to claims 1 to 8.

10. - An electronic device for the segmentation of at least one color source image representative of a photovoltaic unit comprising M photovoltaic modules, M being an integer, the electronic device of at least one color source image comprising:

- a first conversion module, configured to convert said color source image into a grayscale image, by replacing, for each pixel of said color image, the red, green and blue scales with only one grayscale value between 0 and 255, 0 corresponding to white and 255 corresponding to black;
- a first determination module configured to determine a minimum pixel dimension and a maximum pixel dimension of said M photovoltaic modules;
- a second module for determining a first set of N minimum bounds of grayscale values and a second set of Q maximum bounds of grayscale values;
- a second conversion module configured to convert said grayscale image into a binary image, by associating, for a pair formed by one of said N minimum bounds and one of said Q maximum bounds:
- each pixel, the grayscale of which is between the bounds of said pair, having a first binary value representative of the detection of a photovoltaic module pixel, and
- each pixel, the grayscale of which is outside said bounds of said pair, is assigned the binary value complementary to said first binary value, said complementary binary value being representative of the absence of detection of a photovoltaic module pixel;
- a search module, configured to search, from said minimum pixel dimension and said maximum pixel dimension of said M photovoltaic modules, distinct set(s) of pixels, within said pixels, the binary value of which is representative of the detection of a pixel of a photovoltaic module, each set of pixels searched corresponding to one of said M photovoltaic modules,
- a storage module for storing said set(s) of pixels detected by said search module,
said second conversion module, search module, and storage module being apt to reiterate the respective processing thereof for each pair, formed by one of said N minimum bounds and one of said Q maximum bounds, and distinct from one pair to another by at least one of the minimum and/or maximum bounds thereof,
the electronic device for segmenting at least one color source image, further comprising a deletion module configured to:

- delete within a current iteration, distinct from the first iteration, the set(s) of pixels identified during the preceding iterations, the search module focusing during the current iteration on only the remaining zones of the binary image of said current iteration;
- and to transmit the binary image wherein the set(s) of pixels identified during the preceding iterations have been deleted at the input of said search module.

10

12

14

CONV_G

16

18

20

OBT_S

T_D_S?

CONV_B

22

SUPPR

26

24

R

DET

28

M

30

SEGr

FIG.1

FIG.2

## FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **N. OTSU et al.** A threshold selection method from gray-level histograms. *IEEE Trans. Sys., Man., Cyber.*, 1979, vol. 9, 62-66
- **J. CANNY**. A Computational Approach To Edge Detection. *IEEE Transactions on Pattern Analysis and Machine Intelligence*, 1986, vol. 8, 679-698
- **DE VEGA DIAZ JHON JAIRO**. Solar Panel Detection within Complex Backgrounds Using Thermal Images Acquired by UAVs. *Sensors*, 31 October 2020, vol. 20 (21)